# EUROPEAN PATENT APPLICATION

(11) **EP 4 722 888 A1**
(43) Date of publication of application: **08.04.2026**
(21) Application number: 24822253.1
(22) Date of filing: 19.02.2024
(51) Int. Cl.: G06F 3/14

(54) **MIRRORING METHOD, TERMINAL DEVICE AND STORAGE MEDIUM**

(30) Priority: 13.06.2023 CN 202310700863
(71) Applicant: ZTE Corporation, Shenzhen, Guangdong 518057 (CN)
(72) Inventor: GAO, Honghua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/077593
(87) International publication number: WO 2024/255294

(57) **Abstract**

Embodiments of the present disclosure provide a mirroring method, a terminal device and a storage medium. The mirroring method comprises: in the mirroring process of a terminal device, receiving a first operation on an always-on display interface or a screen-off interface of the terminal device; and executing a target mirroring control instruction triggered by the first operation.

## Description

This application claims priority of Chinese Patent Application No. 202310700863.9, filed on June 13, 2023, which is incorporated into this application by reference in its entirety.

### TECHNICAL FIELD

The present disclosure relates to the field of screen-casting technologies, and in particular, to a screen-casting method, a terminal device and a storage medium.

### BACKGROUND

With the development of electronic technologies, screen-casting technologies have been widely used. The screen-casting technologies may refer to a process of casting multimedia files (e.g., videos and audios) from a terminal device (e.g., a mobile phone or a tablet computer) onto other devices (e.g., a smart television or a smart projector) to play. For example, videos from a mobile phone are cast to a smart television to play, so that users may browse the videos from the mobile phone on the smart television.

### SUMMARY

In a first aspect, a screen-casting method is provided and applied to a terminal device. The screen-casting method includes: receiving a first operation on an always on display interface or black screen interface of the terminal device in a screen-casting process of the terminal device; and executing a target screen-casting control instruction triggered by the first operation.

In a second aspect, a screen-casting device is provided and applied to a terminal device. The screen-casting device includes: a receiving unit configured to receive a first operation on an always on display interface or black screen interface of the terminal device in a screen-casting process of the terminal device, and a processing unit configured to execute a target screen-casting control instruction triggered by the first operation.

In a third aspect, a terminal device is provided. The terminal device includes a processor and a memory. The memory stores instructions executable by the processor. The processor is configured to execute the instructions to enable the terminal device to perform the method provided in the first aspect.

In a fourth aspect, a computer readable storage medium is provided. The computer readable storage medium stores computer instructions. When the computer instructions are run on a computer, the computer is enabled to perform the method provided in the first aspect.

In a fifth aspect, a computer program product including computer instructions is provided. When the computer instructions are run on a computer, the computer is enabled to perform the method provided in the first aspect.

### BRIEF DESCRIPTION OF THE DRAWINGS

The accompanying drawings are used for a further understanding of the technical solutions of the present disclosure, constitute a part of the specification, are used to explain the technical solutions of the present disclosure together with the embodiments of the present disclosure, and do not constitute a limitation on the technical solutions of the present disclosure.
FIG. 1 is a schematic diagram of a screen-casting scenario, in accordance with embodiments of the present disclosure;
FIG. 2 is a flow chart of a screen-casting method, in accordance with embodiments of the present disclosure;
FIG. 3 is a schematic diagram of a display interface of a terminal device, in accordance with embodiments of the present disclosure;
FIG. 4 is a schematic diagram of an always on display interface, in accordance with embodiments of the present disclosure;
FIG. 5 is a schematic diagram of another always on display interface, in accordance with embodiments of the present disclosure;
FIG. 6 is a schematic diagram of yet another always on display interface, in accordance with embodiments of the present disclosure;
FIG. 7 is a schematic diagram of yet another always on display interface, in accordance with embodiments of the present disclosure;
FIG. 8 is a schematic diagram of yet another always on display interface, in accordance with embodiments of the present disclosure;
FIG. 9 is a schematic diagram of yet another always on display interface, in accordance with embodiments of the present disclosure;
FIG. 10 is a flow chart of another screen-casting method, in accordance with embodiments of the present disclosure;
FIG. 11 is a flow chart of yet another screen-casting method, in accordance with embodiments of the present disclosure;
FIG. 12 is a flow chart of yet another screen-casting method, in accordance with embodiments of the present disclosure;
FIG. 13 is a schematic diagram showing a structure of a screen-casting system, in accordance with embodiments of the present disclosure;
FIG. 14 is a schematic diagram showing a work flow of a terminal device, in accordance with embodiments of the present disclosure;
FIG. 15 is a schematic diagram showing another work flow of a terminal device, in accordance with embodiments of the present disclosure;
FIG. 16 is a schematic diagram of components of a screen-casting device, in accordance with embodiments of the present disclosure; and
FIG. 17 is a schematic diagram showing a structure of a terminal device, in accordance with embodiments of the present disclosure.

### DETAILED DESCRIPTION

In order to enable those skilled in the art to better understand technical solutions in embodiments of the present disclosure, the technical solutions in the embodiments of the present disclosure will be described clearly and completely with reference to the accompanying drawings in the embodiments of the present disclosure. However, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

In the embodiments of the present disclosure, the term such as "exemplary/exemplarily" or "for example" is used to represent an example, illustration, or explanation. Any embodiment or design solution described herein with "exemplary/exemplarily" or "for example" in the embodiments of the present disclosure should not be construed as being more preferred or advantageous over other embodiments or design solutions. Rather, the use of the term such as "exemplary/exemplarily" or "for example" is intended to present relevant concepts in a specific manner.

For the convenience of understanding the technical solutions of the present disclosure, the terms used in the present disclosure will be briefly introduced below.

An always on display (AOD) technology is a low power consumption display mode. This technology does not need to light up an entire screen of a mobile phone, but only a portion of the screen, and a screen refresh frequency of this technology is also less than a normal frequency. Therefore, even if a display device is constantly in the AOD mode, the display device has a low display power consumption. By using the AOD technology, users don't need to perform too many operations to keep the mobile phone continuously displaying some important content (e.g., time, important information) in a local region of the screen of the mobile phone after the screen is off, and the power consumption is low. Furthermore, users may view the date, time and other information through the mobile phone without lighting up the screen after the always on display function is enabled on the mobile phone, the operation is quite convenient.

A black screen state refers to that a terminal device is in a standby mode, but a screen of the terminal device is not lit up, and the screen of the terminal device presents a black image.

A screen-casting technology refers to connecting a small screen of a terminal device to a large screen of a smart television, to meet the demand for watching movies in the living room. At present, all smart televisions support the screen-casting functions of the terminal devices. There are mainly three mainstream wireless screen-casting technologies in some technologies, and the three wireless screen-casting technologies include AirPlay, digital living network alliance (DLNA), and Miracast.

### I. AirPlay

AirPlay is a wireless technology developed by the Apple company, and allows images, audio, and videos from input output system (IOS) devices such as iPhones, iPads, and iPod touches to be transmitted to any device supporting AirPlay through wireless fidelity (Wi-Fi). AirPlay also has a very special function, which is AirPlay screen mirroring. AirPlay screen mirroring may wirelessly transmit content displayed on the iPhone or iPad to a television. In other words, whatever is displayed on the iPhone or iPad will be displayed on the television, not just images or videos.

### II. DLNA

DLNA protocol is an interconnected and interworking protocol between computers, mobile devices, and consumer appliances. DLNA may transmit only media data (i.e., music, images, videos, and link information), and cannot transmit other types of files and perform screen mirroring (screen sharing). The mobile phone or computer is only responsible for sending the media data and not for playing the media data, and the television plays and displays the media data directly. DLNA does not have a screen-mirroring function similar to the AirPlay of the Apple TV.

### III. Miracast

Miracast is a wireless display standard protocol developed by the Wi-Fi Alliance based on Wi-Fi Direct. Any device that supports this protocol may share a video picture wirelessly. For example, a mobile phone may directly play videos or images on a television or other devices by means of Miracast. Different from DLNA, Miracast also has a screen-mirroring function similar to AirPlay, and may directly cast the screen content of the mobile phone onto the screen of the television.

When using the terminal device to perform screen casting, the user may leave the terminal device unused for a long time, so that the terminal device enters an always on display state or a black screen state. However, in the current screen-casting technologies, the screen of the terminal device cannot respond to any operations when the terminal device is in the always on display state or the black screen state. When the user need to control the screen-casting status, the user needs to manually wake up the screen of the terminal device, open a screen-casting application to enter a screen-casting control interface, so as to control the screen-casting status. This causes a high operation complexity of the terminal device in the screen-casting process.

On this basis, a screen-casting method, a terminal device, and a storage medium are provided in embodiments of the present disclosure. In the screen-casting process of the terminal device, the terminal device may receive an operation for controlling the current screen-casting status on the always on display interface or the black screen interface, and execute a target screen-casting control instruction triggered by the operation, so as to complete controlling the current screen-casting status. As a result, there is no need for the user to wake up the terminal device, the operation is convenient, thereby reducing the operation complexity and the power consumption of the terminal device in the screen-casting process, which is conducive to improving the user experience.

Solutions in the embodiments of the present disclosure will be described below with reference to the accompanying drawings.

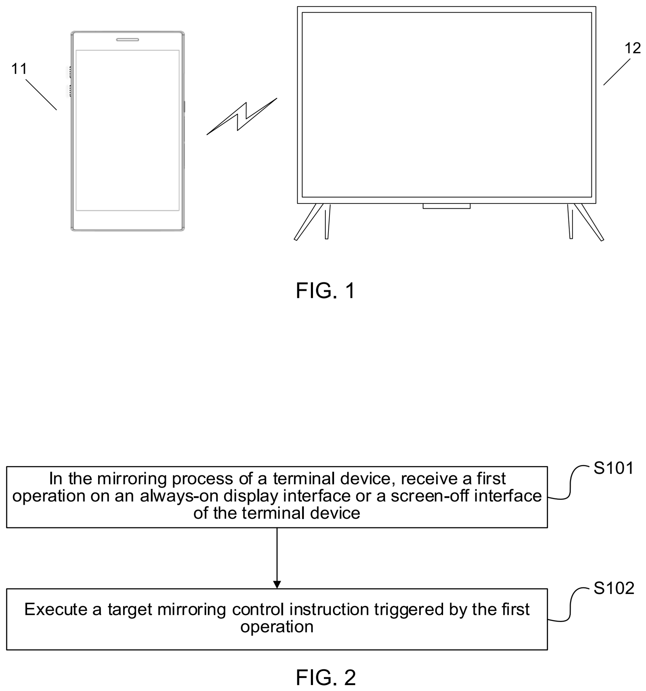

The screen-casting method provided in the embodiments of the present disclosure may be applied to a screen-casting scenario shown in FIG. 1. Referring to FIG. 1, the screen-casting scenario includes a terminal device 11 and a display device 12. The terminal device 11 is a device at a screen-casting sending end, and the display device 12 is a device at a screen-casting receiving end. The terminal device 11 and the display device 12 are communicatively connected with each other. For example, the terminal device 11 and the display device 12 are communicatively connected with each other in a wired manner (e.g., a universal serial bus (USB), a bus) or in a wireless manner (e.g., Bluetooth, Wi-Fi).

It will be noted that screen casting of a multimedia file may be achieved between the terminal device 11 and the display device 12. For example, both terminal device 11 and display device 12 support screen-casting protocols (e.g., the DLNA protocol, the Miracast protocol).

In some embodiments, the terminal device 11 may be installed with a screen-casting application for screen casting and have permission to use a multimedia file. In other words, the terminal device 11 may use or play the multimedia file through the screen-casting application. The screen-casting application in the embodiments of the present disclosure may be an embedded application (i.e., a system application of the terminal device) installed in the terminal device 11 or a downloadable application installed in the terminal device 11. The embedded application is an application provided as part of the implementation of the terminal device (e.g., the mobile phone). The downloadable application is an application that may provide its own Internet Protocol Multimedia Subsystem (IMS) connection. The downloadable application may be an application preinstalled in the terminal device, or a third-party application that may be downloaded and installed in the terminal device by the user, or a quick application integrated into a certain embedded application or downloadable application.

In some embodiments, the terminal device 11 may be a device with a wireless transceiving function. The terminal device 11 may be deployed on land, including indoor or outdoor, handheld, wearable or vehicle-mounted. The terminal device 11 may also be deployed on water (e.g., on a ship). The terminal device 11 may also be deployed in the air (e.g., on an airplane, on a balloon and on a satellite). The terminal device 11 may be a tablet computer, a mobile phone, a desktop computer, a laptop computer, a handheld computer, a netbook computer, a ultra-mobile personal computer (UMPC), a netbook, and devices such as a cellular phone, a personal digital assistant (PDA), an augmented reality (AR) or virtual reality (VR) device, a vehicle-mounted device. The embodiments of the present disclosure do not make any special limitations on the form of the terminal device 11.

In some embodiments, the display device 12 may have a network television function that provides a broadcast receiving function and a computer support function. The display device 12 may be a digital television, a network television, an Internet Protocol television (IPTV), etc. The display device 12 may be a liquid crystal display, an organic light-emitting display, or a projection device. The type, size, and resolution of the display device 12 are not limited. Those skilled in the art may understand that the display device 12 may be modified in terms of performance and configuration as required.

It may be understood that FIG. 1 is an exemplary structural diagram, and the number of devices included in the screen-casting scenario shown in FIG. 1 is not limited. For example, the number of display devices is not limited. Furthermore, in addition to the devices shown in FIG. 1, the screen-casting scenario shown in FIG. 1 may further include other devices, and the present disclosure is not limited thereto.

An executing subject of the screen-casting method provided in the present disclosure may be a screen-casting device, and the screen-casting device may be the terminal device 11 shown in FIG. 1. Meanwhile, the screen-casting device may also be a central processing unit (CPU) of the terminal device 11, or a control module for screen casting in the terminal device 11. In the embodiments of the present disclosure, the screen-casting method provided in the embodiments of the present disclosure is described by considering an example in which the terminal device 11 performs the screen-casting method.

As shown in FIG. 2, a screen-casting method is provided in the embodiments of the present disclosure, and the screen-casting method includes the following S101 and S102.

In S101, a first operation on an always on display interface or black screen interface of a terminal device is received in a screen-casting process of the terminal device.

In some embodiments, in a case where a user needs to cast a screen of a terminal device onto a screen of a display device, the user may use the screen-casting function in the terminal device, to cast the screen of the terminal device onto the screen of the display device for display. That is to say, the content displayed on the screen of the terminal device may be cast onto the screen of the display device for display.

As an example, casting the screen of the terminal device onto the screen of the display device may include at least one of the following implementation manners.

In an implementation manner 1, the screen casting is achieved based on DLNA, that is, the terminal device sends the multimedia file for the screen casting to the display device, and the display device plays the multimedia file.

In an implementation manner 2, the terminal device casts its screen to the display device for mirroring display.

On this basis, the implementation manner 2 may further include at least one of the following implementation manners.

In an implementation manner 2-1, the terminal device casts its main screen to the display device.

In an implementation manner 2-2, the terminal device generates a virtual screen, and then casts the virtual screen to the display device.

It may be understood that the implementation manners described above are merely examples, and the present disclosure does not limit the implementation manner in which the terminal device casts its screen onto the screen of the display device.

In a process in which the user uses the terminal device to perform the screen casting, when the user needs to control the current screen-casting status, the user may perform, on the always on display interface or black screen interface of the terminal device, the first operation for controlling the current screen-casting status. Correspondingly, the terminal device receives the first operation on the always on display interface or black screen interface of the terminal device.

In some embodiments, the always on display interface may also have other names, such as a screen-off display interface.

As an example, the always on display function is enabled by default on the terminal device.

As another example, the always on display function is periodically enabled on the terminal device. For example, the always on display function is enabled from 7 o'clock in the morning to 23 o'clock in the evening and disabled from 23 o'clock in the evening to seven o'clock in the morning on the terminal device.

As another example, the terminal device turns on or off the always on display function in response to instructions of a user. For example, the terminal device turns on the always on display function in response to the instruction after receiving the instruction of the user for turning on the always on display function. The terminal device turns off the always on display function in response to the instruction after receiving the instruction of the user for turning off the always on display function.

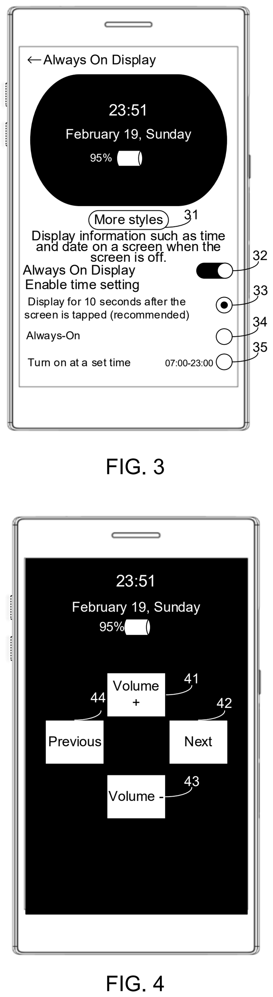

As shown in FIG. 3, FIG. 3 is a schematic diagram of a display interface of a terminal device, in accordance with embodiments of the present disclosure. Referring to FIG. 3, after the user enables the terminal device to enter a control interface of the always on display function, the control interface of the always on display function displays a schematic diagram of the always on display interface. The schematic diagram of the always on display interface may show information such as time, date, and battery level for the user to view. The user may also view a variety of always on display interfaces by touching a "More styles" control 31. The user may touch a control 32 on the control interface of the always on display function, to select whether to turn on or off the always on display function. The user may select to enable the time setting after selecting to turn on the always on display function. For example, in a case where the user touches a control 33, the terminal device displays the always on display interface for 10 seconds after receiving the operation performed by the user on the screen. In a case where the user touches a control 34, the terminal device keeps the always on display function on. In a case where the user touches a control 35, the terminal device turns on the always on display function within a set time and turns off the always on display function beyond the set time.

As an example, the always on display interface includes a target screen-casting controlling control. The first operation on the always on display interface of the terminal device is received, which means that the first operation performed on the target screen-casting controlling control on the always on display interface is received.

In some embodiments, the always on display interface may include at least one screen-casting controlling control, and the target screen-casting controlling control is one of the at least one screen-casting controlling control. The screen-casting control instruction corresponding to the target screen-casting controlling control is pre-configured according to a type of a multimedia file being cast.

As an example, in a case where the type of the multimedia file being cast is video, the screen-casting control instruction includes at least one of: an instruction for fast-forwarding the video, an instruction for rewinding the video, an instruction for playing the next video, an instruction for playing the previous video, an instruction for pausing video playback, an instruction for ending screen casting, an instruction for increasing the volume of the video, and an instruction for reducing the volume of the video.

As another example, in a case where the type of the multimedia file being cast is slide, the screen-casting control instruction includes at least one of: an instruction for increasing a screen-casting ratio of the slide, an instruction for reducing the screen-casting ratio of the slide, an instruction for playing the next slide, an instruction for playing the previous slide, and an instruction for ending screen casting.

In some embodiments, the slide may be a power point (PPT) document.

It may be understood that the description that the type of the multimedia file being cast includes the video and the slide is merely an example, and the embodiments of the present disclosure do not limit the type of the multimedia file. For example, the type of the multimedia file being cast may also be a document. The function of the screen-casting control instruction may be adjusted according to practical application scenarios, and details will not be repeated herein.

In a case where the always on display interface includes the target screen-casting controlling control, for example, in an example where the type of the multimedia file being cast is video, as shown in FIG. 4, FIG. 4 is a schematic diagram of an always on display interface, in accordance with embodiments of the present disclosure. Referring to FIG. 4, the always on display interface of the terminal device includes four screen-casting controlling controls, namely a screen-casting controlling control 41, a screen-casting controlling control 42, a screen-casting controlling control 43 and a screen-casting controlling control 44. The screen-casting controlling control 41 is used for increasing the volume of the video, the screen-casting controlling control 42 is used for playing the next video, the screen-casting controlling control 43 is used for reducing the volume of the video, and the screen-casting controlling control 44 is used for playing the previous video.

With reference to the embodiments shown in FIG. 4, in the process in which the terminal device casts a video, when the user needs to control the current screen-casting status, the user may perform the first operation on the target screen-casting controlling control on the always on display interface. Correspondingly, the terminal device receives the first operation performed on the target screen-casting controlling control on the always on display interface. For example, when the user needs to play the next video, the user may operate the screen-casting controlling control 42, that is, the screen-casting controlling control 42 is the target screen-casting controlling control. For example, the user may tap the screen-casting controlling control 42, to instruct the terminal device to play the next video. Correspondingly, the terminal device receives the tap operation performed by the user on the screen-casting controlling control 42 on the always on display interface.

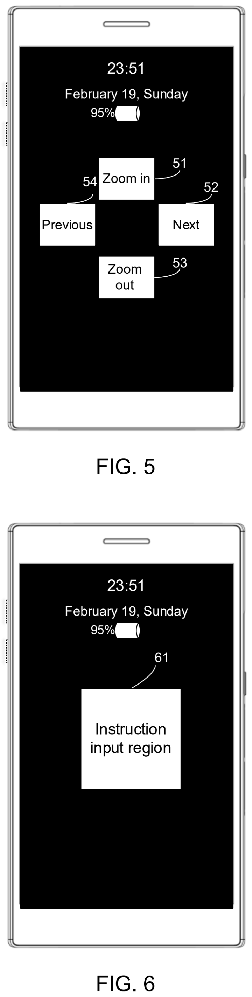

For example, in an example where the type of the multimedia file being cast is slide, as shown in FIG. 5, FIG. 5 is a schematic diagram of another always on display interface, in accordance with embodiments of the present disclosure. Referring to FIG. 5, the always on display interface of the terminal device includes four screen-casting controlling controls, namely a screen-casting controlling control 51, a screen-casting controlling control 52, a screen-casting controlling control 53 and a screen-casting controlling control 54. The screen-casting controlling control 51 is used for increasing the screen-casting ratio of the slide, the screen-casting controlling control 52 is used for playing the next slide, the screen-casting controlling control 53 is used for reducing the screen-casting ratio of the slide, and the screen-casting controlling control 54 is used for playing the previous slide.

With reference to the embodiments shown in FIG. 5, in the process in which the terminal device casts the slide, when the user needs to control the current screen-casting status, the user may perform the first operation on the target screen-casting controlling control on the always on display interface. Correspondingly, the terminal device receives the first operation performed on the target screen-casting controlling control on the always on display interface. For example, when the user needs to play the next slide, the user may operate the screen-casting controlling control 52, that is, the screen-casting controlling control 52 is the target screen-casting controlling control. For example, the user may tap the screen-casting controlling control 52, to instruct the terminal device to play the next slide. Correspondingly, the terminal device receives the tap operation performed by the user on the screen-casting controlling control 52 on the always on display interface.

It will be noted that FIGS. 4 and 5 showing that the always on display interface includes four screen-casting controlling controls, are merely examples. The embodiments of the present disclosure do not limit the number of screen-casting controlling controls included in the always on display interface, the display style of screen-casting controlling controls, or the function corresponding to each screen-casting controlling control. The number of screen-casting controlling controls, the display style of screen-casting controlling controls, and the function corresponding to each screen-casting controlling control may be adjusted according to practical application scenarios, and details will not be repeated herein.

The embodiments are described above by considering an example in which the always on display interface includes the screen-casting controlling controls. As another example, the always on display interface may include an instruction input region. The first operation on the always on display interface of the terminal device is received, which may mean that the first operation within the instruction input region is received.

For example, as shown in FIG. 6, FIG. 6 is a schematic diagram of yet another always on display interface, in accordance with embodiments of the present disclosure. Referring to FIG. 6, the always on display interface includes an instruction input region 61. In the screen-casting process of the terminal device, when the user needs to control the current screen-casting status, the user may perform the first operation within the instruction input region 61 of the always on display interface. Correspondingly, the terminal device receives the first operation within the instruction input region 61.

It may be understood that in a case where the always on display interface includes the instruction input region, it may ensure that operations performed by the user within regions other than the instruction input region will not be mistaken by the terminal device as related operations for controlling screen casting. Therefore, by providing the instruction input region on the always on display interface, it is possible to avoid the impact on the screen-casting process of the terminal device caused by the misoperation of the user, thereby improving the accuracy of screen-casting control.

As another example, the entire always on display interface or the entire black screen interface of the terminal device may be used as the instruction input region. The first operation on the always on display interface or black screen interface of the terminal device is received, which may mean that the first operation on the screen of the terminal device is received.

In a case where the always on display interface of the terminal device includes the instruction input region, or the entire always on display interface or the entire black screen interface of the terminal device serves as the instruction input region, the function corresponding to the first operation is related to the type of the multimedia file being cast.

As an example, in a case where the type of the multimedia file being cast is video, the first operation includes at least one of: a slide-up operation for playing the next video, a slide-down operation for playing the previous video, a slide-right operation for increasing the volume of the video, a slide-left operation for reducing the volume of the video, a single-tap operation for pausing video playback, and a double-tap operation for ending screen casting.

As another example, in a case where the type of the multimedia file being cast is slide, the first operation includes at least one of: a slide-right operation for increasing the screen-casting ratio of the slide, a slide-left operation for reducing the screen-casting ratio of the slide, a slide-up operation for playing the next slide, a slide-down operation for playing the previous slide, and a double-tap operation for ending screen casting.

It may be understood that the functions corresponding to the different operations mentioned above are merely examples and may be adjusted according to application scenarios without limitation. For example, in a case where the type of the multimedia file being cast is video, the slide-right operation may also be used for fast-forwarding the video, and the slide-left operation may also be used for rewinding the video. The slide operations may also have other names. For example, the slide-left operation may also be referred to as a left slipping operation, and details will not be repeated herein.

In some embodiments, the always on display interface includes prompt information that indicates an operation corresponding to a screen-casting control instruction. It may be understood that content of the prompt information is related to the type of the multimedia file being cast.

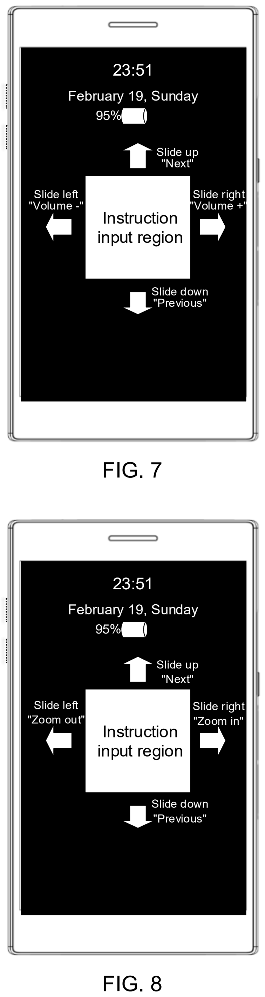

In an example where the always on display interface includes the instruction input region, in a case where the type of the multimedia file being cast is video, as shown in FIG. 7, FIG. 7 is a schematic diagram of yet another always on display interface, in accordance with embodiments of the present disclosure. Referring to FIG. 7, the always on display interface displays the operation corresponding to each screen-casting control instruction. For example, a slide-right operation represents increasing the volume of the video, a slide-left operation represents reducing the volume of the video, a slide-up operation represents playing the next video, and a slide-down operation represents playing the previous video.

In a case where the type of the multimedia file being cast is slide, as shown in FIG. 8, FIG. 8 is a schematic diagram of yet another always on display interface, in accordance with embodiments of the present disclosure. Referring to FIG. 8, the always on display interface displays the operation corresponding to each screen-casting control instruction. For example, a slide-right operation represents increasing the screen-casting ratio of the slide, a slide-left operation represents reducing the screen-casting ratio of the slide, a slide-up operation represents playing the next slide, a slide-down operation represents playing the previous slide.

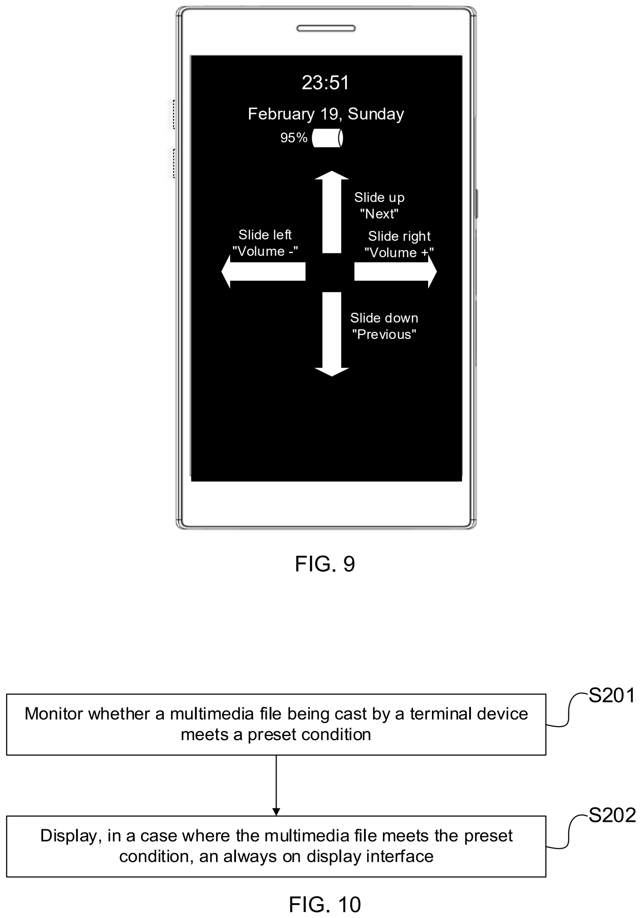

In an example where the entire always on display interface serves as the instruction input region, in a case where the type of the multimedia file being cast is video, as shown in FIG. 9, FIG. 9 is a schematic diagram of yet another always on display interface, in accordance with embodiments of the present disclosure. Referring to FIG. 9, the always on display interface displays the operation corresponding to each screen-casting control instruction. For example, a slide-right operation represents increasing the volume of the video, a slide-left operation represents reducing the volume of the video, a slide-up operation represents playing the next video, and a slide-down operation represents playing the previous video.

It may be understood that there is prompt information on the always on display interface, so that when the user need to control the current screen-casting status, the user may determine the operation corresponding to the screen-casting control instruction according to the prompt information displayed on the always on display interface, and then perform the correct operation, which is conducive to correctly controlling the screen-casting status and improving the user experience.

In S102, a target screen-casting control instruction triggered by the first operation is executed.

In some embodiments, upon receiving the first operation from the user, the terminal device determines the target screen-casting control instruction corresponding to the first operation, and then sends the target screen-casting control instruction to the screen-casting application, so as to instruct the screen-casting application to execute the target screen-casting control instruction triggered by the first operation.

As an example, the terminal device pre-stores at least one instruction mapping table. The instruction mapping table includes a corresponding relationship between the operation and the screen-casting control instruction, and different instruction mapping tables correspond to different types of multimedia files.

Upon receiving the first operation from the user, the terminal device may determine, according to the type of the multimedia file currently being cast, the instruction mapping table corresponding to the type of the multimedia file currently being cast. Then the terminal device may traverse the instruction mapping table according to the first operation, so as to determine the target screen-casting control instruction corresponding to the first operation.

For example, in an example where the type of the multimedia file being cast is video, Table 1 below shows an instruction mapping table provided in the embodiments of the present disclosure.

**Table 1**

| Slide operation | Control operation | Screen-casting control instruction |
|---|---|---|
| Slide up | Tap a "Next" control | Next video |
| Slide down | Tap a "Previous" control | Previous video |
| Slide left | Tap a "Volume -" control | Reduce volume |
| Slide right | Tap a "Volume +" control | Increase volume |

As shown in Table 1, the screen-casting control instruction, corresponding to the slide-up operation in the slide operations and the operation of tapping the "Next" control in the control operations, means to play the next video; the screen-casting control instruction, corresponding to the slide-down operation in the slide operations and the operation of tapping the "Previous" control in the control operations, means to play the previous video; the screen-casting control instruction, corresponding to the slide-left operation in the slide operations and the operation of tapping the "Volume -" control, means to reduce the volume; and the screen-casting control instruction, corresponding to the slide-right operation in the slide operations and the operation of tapping the "Volume +" control, means to increase the volume.

For example, assuming that the first operation performed by the user on the always on display interface of the terminal device is the slide-up operation, the terminal device uses the slide-up operation as an index to traverse the Table 1 after receiving the slide-up operation. If determining that the target screen-casting control instruction is to play the next video, the terminal device sends the target screen-casting control instruction to the screen-casting application of the terminal device, so as to instruct the screen-casting application to play the next video.

Based on the embodiments shown in FIG. 2, in the screen-casting process of the terminal device, the terminal device may receive, on the always on display interface or the black screen interface, the first operation for controlling the current screen-casting status. That is to say, in the screen-casting process of the terminal device, the terminal device may act as a remote control capable of controlling the current screen-casting status in the always on display state or the black screen state, and execute the target screen-casting control instruction triggered by the first operation from the user, thereby completing controlling the current screen-casting status. As a result, there is no need for the user to wake up the terminal device, the operation is convenient, thereby reducing the operation complexity and the power consumption of the terminal device in the screen-casting process, which is conducive to improving the user experience.

In some embodiments, before the first operation on the always on display interface of the terminal device is received, as shown in FIG. 10, the screen-casting method may further include the following S201 and S202.

In S201, the terminal device monitors whether the multimedia file being cast by the terminal device meets a preset condition.

In some embodiments, after the terminal device performs screen casting, in order to display the always on display interface at an appropriate occasion for the user to control the current screen-casting status, the terminal device monitors whether the multimedia file being cast meets the preset condition. The preset condition includes that the multimedia file finishes playing. For example, in an example where the type of the multimedia file being cast is video, the preset condition may be that the video being cast finishes playing.

It may be understood that the preset condition is related to the type of the multimedia file being cast. Those skilled in the art may understand that the preset condition may be adjusted to some extent according to the type of the multimedia file being cast, and the present disclosure is not limited thereto.

In S202, in a case where the multimedia file meets the preset condition, the always on display interface is displayed.

It may be understood that the terminal device automatically displays the always on display interface for the user to control the current screen-casting status after detecting that the multimedia file currently being cast has finished playing, thereby improving the intelligence level of the terminal device in the screen-casting process, which is conducive to improving the user experience.

As an example, in a case where the terminal device detects that the multimedia file being cast by the terminal device does not meet the preset condition, the terminal device may enter the black screen state. That is to say, the screen of the terminal device is in the black screen state, but the screen casting is still in progress.

It may be understood that the terminal device has low power consumption in the black screen state. In a case where the terminal device detects that the multimedia file being cast by the terminal device does not meet the preset condition, the terminal device enters the black screen state, which is conducive to reducing the power consumption of the terminal device in the screen-casting process.

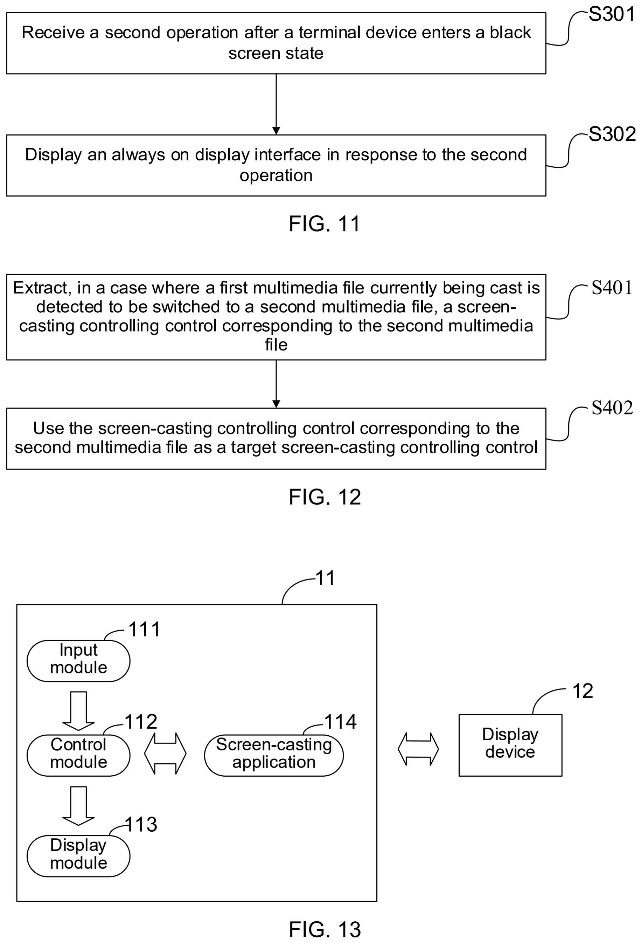

In some embodiments, before the first operation on the always on display interface of the terminal device is received, as shown in FIG. 11, the screen-casting method may further include the following S301 and S302.

In S301, a second operation is received after the terminal device enters the black screen state.

In S302, the always on display interface is displayed in response to the second operation.

It may be understood that in the embodiments shown in FIG. 10, in a case where the terminal device detects that the multimedia file being cast meets the preset condition, the terminal device automatically displays the always on display interface, so as improve the intelligence level of the terminal device in the screen-casting process. In some embodiments, the terminal device may also receive the second operation from the user after the terminal device enters the black screen state, and then display the always on display interface in response to the second operation.

It may be understood that when the second operation from the user is received, it means that the user needs to control the current screen-casting status. Therefore, upon receiving the second operation, the terminal device displays the always on display interface in response to the second operation, so as to allow the user to control the current screen-casting status.

The second operation may be any one of: a tap operation, slide operation, and touch operation performed by the user on the screen of the terminal device. The tap operation may include a single-tap operation and a double-tap operation, and the present disclosure is not limited thereto.

In some embodiments, after the terminal device displays the always on display interface, if the terminal device receives no third operation from the user within a preset duration, the terminal device enters the black screen state, to reduce the power consumption of the terminal device in the screen-casting process. The preset duration may be preset when the terminal device leaves a factory, or the preset duration may be defined by the user, and the present disclosure is not limited thereto. For example, the preset duration is 10 seconds (S). That is to say, if the terminal device has still not received the third operation from the user after displaying the always on display interface for 10 seconds, the terminal device enters the black screen state. For the description of the third operation, reference may be made to the description of the second operation described above, and details will not be repeated herein.

In some embodiments, after the terminal device receives the first operation performed on the target screen-casting controlling control on the always on display interface and executes the target screen-casting control instruction triggered by the first operation, as shown in FIG. 12, the screen-casting method may further include the following S401 and S402.

In S401, in a case where a first multimedia file currently being cast is detected to be switched to a second multimedia file, a screen-casting controlling control corresponding to the second multimedia file is extracted.

In some embodiments, in the screen-casting process of the terminal device, the user may replace the first multimedia file currently being cast with the second multimedia file. In a case where the terminal device detects that the first multimedia file currently being cast is switched to the second multimedia file, the terminal device extracts a screen-casting controlling control corresponding to the second multimedia file.

In an example where the first multimedia file currently being cast is a video and the second multimedia file is a slide, in a process in which the terminal device casts the video, if the user chooses to stop casting the video and instead cast the slide, the terminal device extracts, in a case where the terminal device detects that the multimedia file currently being cast is switched from the video to the slide, a screen-casting controlling control corresponding to the slide.

In S402, the screen-casting controlling control corresponding to the second multimedia file is used as the target screen-casting controlling control.

From the description mentioned above, it may be seen that the screen-casting control instruction corresponding to the target screen-casting controlling control is pre-configured according to the type of the multimedia file being cast. In a case where the first multimedia file currently being cast is detected to be switched to the second multimedia file, if the target screen-casting controlling control displayed on the always on display interface is not replaced, the user may be unable to correctly control screen casting in the subsequent process, thus affecting the user experience. Therefore, in a case where the first multimedia file currently being cast is detected to be switched to the second multimedia file, the screen-casting controlling control corresponding to the second multimedia file is extracted and serves as the target screen-casting controlling control, so that the user may correctly control the screen-casting status, which is conducive to ensuring the user experience.

As an example, in a case where the terminal device detects that the first multimedia file currently being cast is switched to the second multimedia file, the terminal device may first determine whether the type of the second multimedia file is the same as the type of the first multimedia file. In a case where the type of the second multimedia file is different from that of the first multimedia file, the terminal device extracts the screen-casting controlling control corresponding to the second multimedia file and uses the screen-casting controlling control corresponding to the second multimedia file as the target screen-casting controlling control. In a case where the type of the second multimedia file is the same as that of the first multimedia file, the terminal device may not need to extract the screen-casting controlling control corresponding to the second multimedia file and may still use the screen-casting controlling control corresponding to the first multimedia file as the target screen-casting controlling control. In this way, it is conducive to reducing the consumption of computing resources of the terminal device.

The screen-casting method provided in the embodiments of the present disclosure will be described below with reference to examples.

As shown in FIG. 13, FIG. 13 is a schematic diagram showing a structure of a screen-casting system, in accordance with the embodiments of the present disclosure. Referring to FIG. 13, the screen-casting system includes a terminal device 11 and a display device 12. The terminal device 11 includes an input module 111, a control module 112, a display module 113, and a screen-casting application 114.

The input module 111 is configured to acquire an operation from a user. For example, the input module 111 receives the operation performed by the user on a screen of the terminal device 11 and sends the acquired operation to the control module 112. The operation of the user may include the following two types of operations.
1. A tap operation (e.g., a single-tap operation, a double-tap operation), a slide-left operation, a slide-right operation, a slide-up operation, a slide-down operation, etc.
2. A tap operation performed by the user on a screen-casting controlling control on the always on display interface.

In some embodiments, the control module 112 is configured to control the terminal device 11 to enter a black screen state after the terminal device 11 enters a screen-casting state, and prompt, according to the type of the multimedia file currently being cast, the user of the currently supported operations by means of the always on display interface at an appropriate occasion. If no operation from the user is received within the preset duration, such as 10 seconds, the always on display interface is turned off, so that the terminal device enters the black screen state. The appropriate occasion includes when the operation form the user is received or when the multimedia file currently being cast finishes playing.

The control module 112 is further configured to receive the operation of the user, convert the operation received from the user into the corresponding screen-casting control instruction according to the instruction mapping table described above, and then send the screen-casting control instruction to the screen-casting application, to instruct the screen-casting application to execute the screen-casting control instruction triggered by the operation of the user.

In some embodiments, the display module 113 is configured to display an always on display interface or a black screen interface.

In some embodiments, the display module 113 is further configured to display prompt information on the always on display interface.

In some embodiments, the display module 113 is further configured to display a target screen-casting controlling control on the always on display interface.

In some embodiments, the display module 113 is further configured to display an instruction input region on the always on display interface.

For the related description of the prompt information and the target screen-casting controlling control, reference may be made to the corresponding description in S101, and details will not be repeated herein.

In some embodiments, the screen-casting application 114 is configured to receive the screen-casting control instruction sent by the control module 112 and execute the operation corresponding to the screen-casting control instruction.

In some embodiments, the display device 12 is configured to display the multimedia file being cast by the terminal device.

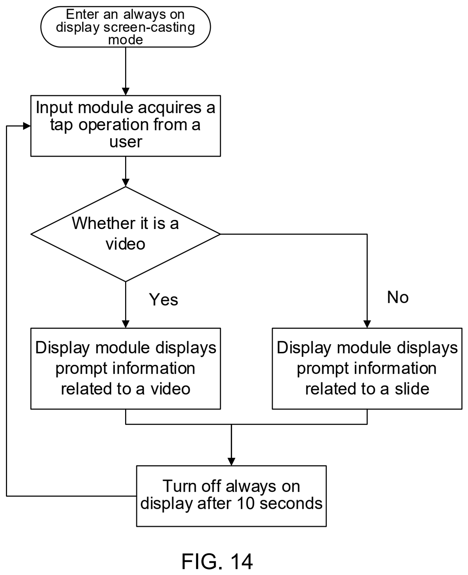

How the terminal device displays the always on display interface in the screen-casting process is described herein with examples and in combination with the screen-casting system shown in FIG. 13. As shown in FIG. 14, FIG. 14 is a schematic diagram showing a work flow of a terminal device, in accordance with embodiments of the present disclosure. Referring to FIG. 14, after the terminal device enters an always on display screen-casting mode, upon the input module acquires a tap operation performed by the user on the always on display interface, the control module determines whether the type of the multimedia file currently being cast is video. In a case where the type of the multimedia file currently being cast is video, the display module displays prompt information related to the video on the always on display interface, so as to prompt the user of the related operations. In a case where the type of the multimedia file currently being cast is not video, the display module displays prompt information related to the slide on the always on display interface, so as to prompt the user of the related operations. After the display module displays the related prompt information on the always on display interface, if no operation from the user is received within 10 seconds, the display module turns off the always on display interface after the 10 seconds, so as to enter the black screen state.

The always on display screen-casting mode refers to that the terminal device enters the always on display mode in the screen-casting process.

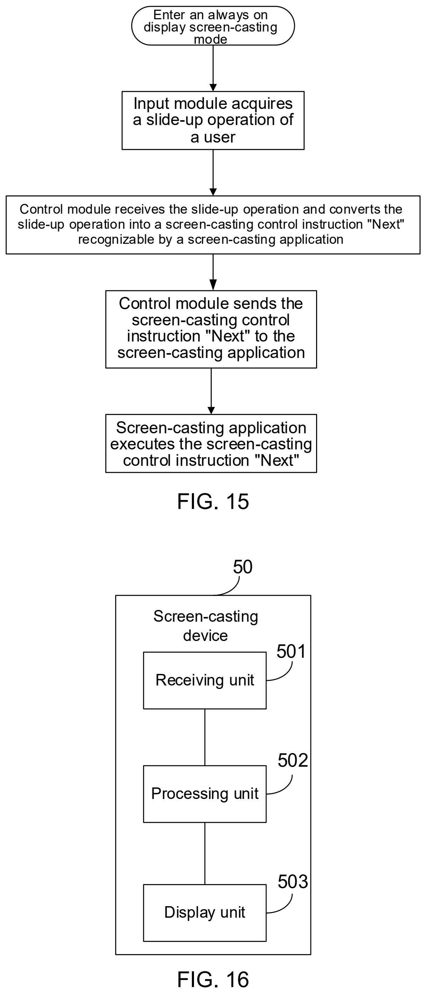

How the terminal device interacts with the user in the screen-casting process is described herein with examples and in combination with the screen-casting system shown in FIG. 13. As shown in FIG. 15, FIG. 15 is a schematic diagram showing another work flow of a terminal device, in accordance with embodiments of the present disclosure. Referring to FIG. 15, in an example where the type of the multimedia file being cast by the terminal device is video, after the terminal device enters the always on display screen-casting mode, the input module receives the operation (e.g., the slide-up operation) performed by the user on the screen of the terminal device, and then the input module sends the slide-up operation to the control module. After receiving the slide-up operation, the control module converts the slide-up operation into a screen-casting control instruction "Next" recognizable by the screen-casting application, and sends the screen-casting control instruction "Next" to the screen-casting application. The screen-casting application executes the screen-casting control instruction "Next" to play the next video after receiving the screen-casting control instruction "Next".

The foregoing description mainly introduces the solutions provided in the present disclosure from perspective of interaction between various nodes. It may be understood that, in order to achieve the functions described above, each node, such as the terminal device, includes corresponding hardware structures and/or software modules for executing various functions. Those skilled in the art will easily realize that the present disclosure may be implemented in the form of hardware or a combination of hardware and computer software, with reference to the algorithm steps of various examples described in the embodiments disclosed herein. Whether a certain function is performed by hardware or computer software-driven hardware depends on the specific application and design constraints of the technical solutions. Professional technicians may use different methods to implement the described functions, for each specific application, but such implementation will not be considered beyond the scope of the present disclosure.

FIG. 16 is a schematic diagram of components of a screen-casting device, in accordance with embodiments of the present disclosure. As shown in FIG. 16, the screen-casting device 50 includes a receiving unit 501 and a processing unit 502. In some embodiments, the screen-casting device 50 may further include a display unit 503.

The screen-casting device 50 may be the terminal device described above or a chip in the terminal device. In a case where the screen-casting device 50 is used to implement the functions of the terminal device in the embodiments described above, various units are, for example, configured to implement the following functions.

The receiving unit 501 is configured to receive a first operation on an always on display interface or black screen interface of a terminal device in the screen-casting process of the terminal device.

The processing unit 502 is configured to execute a target screen-casting control instruction triggered by the first operation.

In some embodiments, the always on display interface includes a target screen-casting controlling control. The receiving unit 501 is configured to, for example, receive the first operation performed on the target screen-casting controlling control on the always on display interface.

In some embodiments, a screen-casting control instruction corresponding to the target screen-casting controlling control is pre-configured according to a type of a multimedia file being cast.

In some embodiments, in a case where the type of the multimedia file is video, the screen-casting control instruction includes at least one of: an instruction for fast-forwarding the video, an instruction for rewinding the video, an instruction for playing the next video, an instruction for playing the previous video, an instruction for pausing video playback, an instruction for ending screen casting, an instruction for increasing the volume of the video, and an instruction for reducing the volume of the video. Alternatively, in a case where the type of the multimedia file is slide, the screen-casting control instruction includes at least one of: an instruction for increasing a screen-casting ratio of the slide, an instruction for reducing the screen-casting ratio of the slide, an instruction for playing the next slide, an instruction for playing the previous slide, and an instruction for ending screen casting.

In some embodiments, the always on display interface includes prompt information that indicates an operation corresponding to the screen-casting control instruction.

In some embodiments, the always on display interface includes an instruction input region. The receiving unit 501 is configured to, for example, receive the first operation within the instruction input region.

In some embodiments, in a case where the type of the multimedia file being cast is video, the first operation includes at least one of: a slide-up operation for playing the next video, a slide-down operation for playing the previous video, a slide-right operation for increasing the volume of the video, a slide-left operation for reducing the volume of the video, a single-tap operation for pausing video playback, and a double-tap operation for ending screen casting. In a case where the type of the multimedia file being cast is slide, the first operation includes at least one of: a slide-right operation for increasing the screen-casting ratio of the slide, a slide-left operation for reducing the screen-casting ratio of the slide, a slide-up operation for playing the next slide, a slide-down operation for playing the previous slide, and a double-tap operation for ending screen casting.

In some embodiments, the processing unit 502 is further configured to monitor whether the multimedia file being cast by the terminal device meets a preset condition.

The display unit 503 is configured to display, in a case where the multimedia file meets the preset condition, the always on display interface.

In some embodiments, the preset condition includes that the multimedia file finishes playing.

In some embodiments, the receiving unit 501 is further configured to receive a second operation after the terminal device enters a black screen state.

The display unit 503 is further configured to display the always on display interface in response to the second operation.

In some embodiments, the processing unit 502 is further configured to: extract, in a case where the processing unit 502 detects that a first multimedia file currently being cast is switched to a second multimedia file, a screen-casting controlling control corresponding to the second multimedia file, and use the screen-casting controlling control corresponding to the second multimedia file as the target screen-casting controlling control.

It will be noted that the units in FIG. 16 may also be referred to as modules. For example, a sending unit may be referred to as a sending module. In addition, in the embodiments shown in FIG. 16, each unit may also have a name different from the one shown in the figure. For example, the receiving unit may also be referred to as a communication unit.

If the units in FIG. 16 are implemented in the form of software functional modules and sold or used as independent products, they may be stored in a computer readable storage medium. Based on such understanding, the technical solutions of the embodiments of the present disclosure may be essentially, or some of the technical solutions of the embodiments of the present disclosure that contribute to some technologies may be, or all or some of the technical solutions may be, embodied in the form of a software product. The computer software product is stored in a storage medium and includes a plurality of instructions for enabling a computer device (e.g., a personal computer, a server, or a network device) or a processor to perform all or some of the steps of the methods as described in the embodiments of the present disclosure. The storage medium for storing the computer software product includes a variety of media capable of storing program codes, such as a U disk (USB flash disk), a mobile hard disk, a read-only memory (ROM), a random-access memory (RAM), a magnetic disk, or an optical disk.

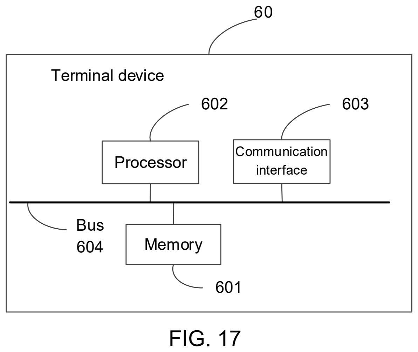

In a case where the screen-casting device 50 implements the functions of the integrated module in the form of hardware, a schematic diagram showing a structure of a terminal device is provided in the embodiments of the present disclosure. As shown in FIG. 17, the terminal device 60 includes: a processor 602, a communication interface 603, and a bus 604. In some embodiments, the terminal device 60 may further include a memory 601.

The processor 602 may implement or execute various exemplary logical blocks, modules and circuits described in combination with content of the present disclosure. The processor 602 may be a central processing unit, a general-purpose processor, a digital signal processor, an application specific integrated circuit, a field programmable gate array or any other programmable logic device, a transistor logic device, a hardware component, or any combination thereof. The processor 602 may implement or execute various exemplary logical blocks, modules and circuits described in combination with content of the present disclosure. The processor 602 may also be a combination that implements computing functions, for example, a combination of one or more microprocessors, or a combination of a digital signal processor (DSP) and a microprocessor.

The communication interface 603 is used to connect to other devices through a communication network. The communication network may be an Ethernet, a wireless access network, a wireless local area network (WLAN), or the like.

The memory 601 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

In an implementation manner, the memory 601 may exist independently of the processor 602, and the memory 601 may be connected to the processor 602 through the bus 604 and used for storing instructions or program codes. When calling and executing the instructions or program codes stored in the memory 601, the processor 602 may achieve the screen-casting method provided in the embodiments of the present disclosure.

In another implementation manner, the memory 601 may also be integrated with the processor 602.

The bus 604 may be an extended industry standard architecture (EISA) bus or the like. The bus 604 may be classified as an address bus, a data bus, and a control bus. For ease of representation, only one bold line is used in FIG. 17, but it does not mean that there is only one bus or one type of bus.

From description of the embodiments described above, those skilled in the art may clearly understand that, for the convenience and brevity of description, an example is only given according to the division of functional modules described above. In practical applications, the functions described above may be allocated to different functional modules as needed, that is, the internal structure of the terminal device is divided into different functional modules to complete all or some of the functions described above.

A computer readable storage medium is further provided in some embodiments of the present disclosure, and the computer readable storage medium includes a non-transitory computer readable storage medium. All or some of the processes in the method embodiments described above may be implemented by using computer instructions to control related hardware. The program may be stored in the computer readable storage medium. When the program is executed, it may include processes as described in the method embodiments described above. The computer readable storage medium may be the memory or storage device of any one of the embodiments described above. The computer readable storage medium may also be an external storage device of the terminal device, such as a plug-in hard disk, a smart media card (SMC), a secure digital (SD) card, a flash card, equipped on the terminal device. Furthermore, the computer readable storage medium may also include both an internal storage unit of the terminal device and an external storage device. The computer readable storage medium is used to store the computer program mentioned above and other programs and data required by the terminal device mentioned above. The computer readable storage medium may also be used to temporarily store data that has been output or is to be output.

A computer program product is further provided in the embodiments of the present disclosure. The computer program product includes a computer program. When the computer program product is run on a computer, the computer program product enables the computer to perform any one of the screen-casting methods provided in the embodiments mentioned above.

In the embodiments of the present disclosure, in the screen-casting process of the terminal device, it is possible to directly adjust the current screen-casting status on the always on display interface or black screen interface of the terminal device without waking up the terminal device, so that the operation is convenient, thereby reducing the operation complexity of the terminal device in the screen-casting process. Furthermore, the power consumption of the terminal device in the always on display state or black screen state is less than that of the terminal device keeps in a screen-on state, thereby reducing the operation complexity and power consumption of the terminal device in the screen-casting process, which is conducive to improving the user experience.

Although the present disclosure has been described herein in conjunction with various embodiments, other variations of the disclosed embodiments may be understood and achieved by those skilled in the art by viewing the accompanying drawings, the disclosed content, and the claims as provided, during the implementation of the present disclosure for which protection is claimed. In the claims, the word "comprise/comprises/comprising/include/includes/including" does not exclude other components or steps, and "a/an" or "one" does not exclude a case of multiple. A single processor or other units may achieve several functions listed in the claims. A fact that some solutions are recorded in dependent claims different from each other does not mean that these solutions cannot be combined to exert a good effect.

Although the present disclosure has been described in conjunction with specific features and embodiments thereof, it will be apparent that various modifications and combinations may be made thereto without departing from the spirit and scope of the present disclosure. Accordingly, the specification and drawings are merely illustrative examples of the present disclosure as defined by the appended claims and are deemed to cover any and all modifications, variations, combinations or equivalents within the scope of the present disclosure. Obviously, those skilled in the art may make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are merely specific implementations of the present disclosure, but the protection scope of the present disclosure is not limited thereto, and any variations or replacements within the technical scope of the present disclosure shall fall within the protection scope of the present disclosure. Therefore, the protection scope of the present disclosure shall be subject to the protection scope of the claims.

## Claims

1. A screen-casting method, applied to a terminal device, comprising:
receiving a first operation on an always on display interface or black screen interface of the terminal device in a screen-casting process of the terminal device; and
executing a target screen-casting control instruction triggered by the first operation.

2. The method according to claim 1, wherein the always on display interface includes a target screen-casting controlling control; the receiving the first operation on the always on display interface of the terminal device, includes:
receiving, on the always on display interface, the first operation performed on the target screen-casting controlling control.

3. The method according to claim 2, wherein a screen-casting control instruction corresponding to the target screen-casting controlling control is pre-configured according to a type of a multimedia file being cast.

4. The method according to claim 3, wherein
in a case where the type of the multimedia file is video, the screen-casting control instruction includes at least one of: an instruction for fast-forwarding the video, an instruction for rewinding the video, an instruction for playing a next video, an instruction for playing a previous video, an instruction for pausing video playback, an instruction for ending screen casting, an instruction for increasing volume of the video, and an instruction for reducing the volume of the video;
or,
in a case where the type of the multimedia file is slide, the screen-casting control instruction includes at least one of: an instruction for increasing a screen-casting ratio of the slide, an instruction for reducing the screen-casting ratio of the slide, an instruction for playing a next slide, an instruction for playing a previous slide, and an instruction for ending screen casting.

5. The method according to claim 1, wherein the always on display interface includes prompt information, the prompt information is used to indicate an operation corresponding to a screen-casting control instruction.

6. The method according to claim 1, wherein the always on display interface includes an instruction input region; the receiving the first operation on the always on display interface of the terminal device, includes:
receiving the first operation within the instruction input region.

7. The method according to claim 1, wherein
in a case where a type of a multimedia file being cast is video, the first operation includes at least one of: a slide-up operation for playing a next video, a slide-down operation for playing a previous video, a slide-right operation for increasing volume of the video, a slide-left operation for reducing the volume of the video, a single-tap operation for pausing video playback, and a double-tap operation for ending screen casting;
in a case where the type of the multimedia file being cast is slide, the first operation includes at least one of: a slide-right operation for increasing a screen-casting ratio of the slide, a slide-left operation for reducing the screen-casting ratio of the slide, a slide-up operation for playing a next slide, a slide-down operation for playing a previous slide, and a double-tap operation for ending screen casting.

8. The method according to claim 1, wherein before the first operation on the always-on display interface of the terminal device is received, the method further comprises:
monitoring whether a multimedia file being cast by the terminal device meets a preset condition; and
displaying, in a case where the multimedia file meets the preset condition, the always on display interface.

9. The method according to claim 8, wherein the preset condition includes that the multimedia file finishes playing.

10. The method according to claim 1, wherein before the first operation on the always-on display interface of the terminal device is received, the method further comprises:
receiving a second operation after the terminal device enters a black screen state; and
displaying, in response to the second operation, the always on display interface.

11. The method according to claim 2, further comprising:
extracting, in a case where a first multimedia file currently being cast is detected to be switched to a second multimedia file, a screen-casting controlling control corresponding to the second multimedia file; and
using the screen-casting controlling control corresponding to the second multimedia file as the target screen-casting controlling control.

12. A terminal device, comprising: a processor and a memory;
wherein the memory has stored instructions executable by the processor; and
the processor is configured to execute the instructions to enable the terminal device to perform the method according to any one of claims 1 to 11.

13. A computer readable storage medium, wherein the computer readable storage medium comprises computer instructions that, upon being run on a computer, enable the computer to perform the method according to any one of claims 1 to 11.
